# EUROPÄISCHE PATENTSCHRIFT

(11) **EP 2 710 688 B1**
(45) Veröffentlichungstag und Bekanntmachung des Hinweises auf die Patenterteilung: **05.04.2017**
(21) Anmeldenummer: 12721295.9
(22) Anmeldetag: 16.05.2012
(51) Int. Cl.: B60L 11/18, H01R 13/62, H01R 107/00, H01R 13/639

(54) **ELEKTRISCHER STECKVERBINDER**
ELECTRICAL PLUG CONNECTOR
CONNECTEUR ÉLECTRIQUE

(30) Priorität: 20.05.2011 DE 102011050536
(43) Veröffentlichungstag der Anmeldung: 26.03.2014
(73) Patentinhaber: Phoenix Contact GmbH & Co. KG, 32825 Blomberg (DE)
(72) Erfinder: FÜHRER, Thomas, 32825 Blomberg (DE)
(74) Vertreter: Michalski Hüttermann & Partner Patentanwälte mbB
(86) Internationale Anmeldenummer: PCT/EP2012/059104
(87) Internationale Veröffentlichungsnummer: WO 2012/159950

(56) Entgegenhaltungen:
- WO-A1-2010/115927
- DE-A1-102009 043 845
- US-A1- 2009 082 916
- US-B2- 6 914 346

## Beschreibung

Die Erfindung betrifft einen Steckverbinder zum elektrischen Anschließen eines Elektrofahrzeugs an eine Ladeeinrichtung, wobei der Steckverbinder zum Herstellen einer elektrischen Verbindung mit einem zweiten dem Elektrofahrzeug oder der Ladeeinrichtung zugeordneten Steckverbinder ausgestaltet ist.

Im Bereich von E-Mobility-Applikationen sind Steckverbinder mit elektrischer Verriegelung bekannt und normativ vorgesehen, um elektrische Energie von einer Ladeeinrichtung zum Aufladen eines in dem Elektrofahrzeug vorgesehenen Fahrzeugakkumulators zu übertragen.

Dazu können an der Ladeeinrichtung und an dem Elektrofahrzeug jeweils ein Gerätestecker vorgesehen sein, so dass mittels eines Verbindungskabels, das an beiden Enden einen zu dem Gerätestecker korrespondierenden Kabelstecker aufweist, eine elektrische Verbindung zwischen der Ladeeinrichtung und dem Elektrofahrzeug herstellbar ist.

Die Realisierung dieser elektrischen Verriegelung kann ein mechanisches Einfahren eines Zylinderstiftes senkrecht zur Steckrichtung der vollständig auf Anschlag gesteckten Steckverbinder vorsehen, wobei durch den Zylinderstift der Gerätestecker und der Kabelstecker in radialer Richtung über entsprechende Bohrungen durchdrungen werden können, so dass beim Verriegeln ein Formschluss in axialer Richtung erzeugt wird. Dadurch wird ein manuelles Lösen der verbundenen Steckverbinder verhindert, damit aufgrund von Sicherheitsaspekten unter elektrischer Last stehende Steckverbinder nicht voneinander getrennt werden können oder eine nicht vollständig durchgeführte Aufladung des Fahrzeugakkumulators nicht unterbrechen wird. In der Regel erfolgt der Antrieb des Zylinderstiftes elektromechanisch, beispielsweise über Hubmagnete oder Aktuatoren mit vorgeschalteter Mechanik.

Hubmagnete arbeiten dabei oftmals gegen eine mechanische Feder und müssen unter Verbrauch elektrischer Energie permanent aktiv in Endlage, also wenn die Steckverbinder verriegelt sind, gehalten werden. Bei Ausfall der Versorgungsspannung öffnet die Feder und entriegelt das System selbsttätig. Nachteilig ist jedoch, dass die zur Ansteuerung notwendige Leistung seitens einer Steuerelektronik konstant aufgebracht werden muss und oftmals mehrere Watt beträgt.

Aktuatoren hingegen werden in der Regel durch kurze, im Wechsel gepolte Stromimpulse angesteuert und verbleiben nach Erreichen der Endlage passiv in ihrer Verriegelungs- bzw. Entriegelungsposition. Das bedeutet, dass Aktuatoren auch im verriegelten Zustand, beispielsweise bei der Ladung der Fahrzeugakkumulatoren des Elektrofahrzeugs, keinerlei Energie verbrauchen. Bei Stromausfall, insbesondere der Ladeeinrichtung, können Aktuatoren allerdings nicht mehr aktiviert werden, was zu einer dauerhaften, ungewollten Verriegelung der Steckverbinder führt.

Ein federgestütztes Zurücksetzen der Aktuatoren aus der Verriegelungsposition in die Entriegelungsposition ist aus mechanischen Gründen oftmals nicht oder nur mit großem Aufwand möglich. Auch eine rein mechanische Notfallentriegelung, die beispielsweise über einen Drahtseilzug bedienbar ist, scheidet oftmals aus, da dazu eine permanente Zugänglichkeit dieser Entriegelung notwendig ist, welche jedoch, obwohl grundsätzlich möglich, aus Gründen des Missbrauchs, insbesondere an öffentlichen Ladeeinrichtungen, vielfach nicht gewollt ist.

Die US 2009/082916 A1 beschreibt ein Ladesystem für ein Fahrzeug, das eine eingebaute Batterie für eine Fahrleistung verwendet, mit einer Türverriegelungseinrichtung, die zwischen einem Türverriegelungszustand, in dem eine Tür des Fahrzeugs geschlossen und verriegelt ist, und einem Türentriegelungszustand, in dem die Tür zum Einsteigen entriegelt ist, schaltet.

Die WO 2010/115927 A1 beschreibt eine Ladekabelverriegelungsvorrichtung für Elektrofahrzeuge mit einer fahrzeugseitigen Aufnahme zur Aufnahme eines mit einer Ladestation verbindbare Ladekabels, und einer an der Aufnahme angeordneten Verriegelungseinrichtung, wobei die Verriegelungseinrichtung zum verriegeln und Freigeben des Ladekabels mit der Aufnahme gebildet ist.

Die DE 10 2009 043845 A1 beschreibt ein Steckvorrichtungssystem, bei dem ein Aktuator über ein flexibles Kopplungselement mit einem Steckvorrichtungselement verbunden ist.

Daher liegt der Erfindung die Aufgabe zugrunde, eine besonders einfache Lösung anzugeben, um auch bei Stromausfall der Ladeeinrichtung oder der Elektrofahrzeugs einen durch einen Aktuator angetriebenen Entriegelung- bzw. Verriegelungsvorgang der elektrischen Verbindung der Steckverbinder zwischen der Ladeeinrichtung und dem Elektrofahrzeug ermöglichten zu können.

Die Lösung der Aufgabe erfolgt erfindungsgemäß durch die Merkmale des unabhängige Anspruchs. Vorteilhafte Ausgestaltungen in der Erfindung sind in den Unteransprüchen angegeben.

Demnach wird die Aufgabe der Erfindung gelöst durch einen Steckverbinder zum elektrischen Anschließen eines Elektrofahrzeugs an eine Ladeeinrichtung, wobei der Steckverbinder zum Herstellen einer elektrischen Verbindung mit einem zweiten dem Elektrofahrzeug oder der Ladeeinrichtung zugeordneten Steckverbinder ausgestaltet ist, der Steckverbinder einen durch einen elektrischen Impuls ansteuerbaren Aktuator zum Verriegeln bzw. Entriegeln der vorzugsweise miteinander verbundenen Steckverbinder aufweist, und der Steckverbinder eine Energiequelle zum Erzeugen des elektrischen Impulses aufweist.

Die Erfindung geht damit einen ganz neuen Weg, indem nämlich der Steckverbinder eine Energiequelle zum Erzeugen des elektrischen Impulses aufweist, somit die zum Verriegeln bzw. Entriegeln der miteinander verbundenen Steckverbinder benötigte Energie durch den Steckverbinder selbst bereit gestellt werden kann. Dies hat den enormen vorteil, dass bei einem Stromausfall, insbesondere der Ladeeinrichtung oder einem dem Elektrofahrzeug zugeordneten Akkumulator, der Aktuator ein Entriegeln der miteinander verbundenen Steckverbinder ermöglicht.

Durch die erfindungsgemäße Lösung wird es also ermöglicht, dass bei Stromausfall ein mittels des zweiten Steckverbinders mit dem Steckverbinder, also einem ersten Steckverbinder, verbundenes Verbindungskabel von dem an der Ladeeinrichtung oder an dem Elektrofahrzeug vorgesehenen Steckverbinder lösbar ist, also beispielsweise ein Kabelstecker aus einem der Ladeeinrichtung oder dem Elektrofahrzeug zugeordneten Gerätesteckverbinder lösbar ist. Da dadurch beispielsweise das Verbindungskabel trotz Stromausfall der Ladestation von dem Elektrofahrzeug entfernbar ist, bleibt das Elektrofahrzeug weiterhin fahrbar, und ein möglicher Verlust des Verbindungskabels bei Wegfahrt des Elektrofahrzeugs, und dem damit einhergehenden Verlust einer weiteren Nachlademöglichkeit, wird ebenfalls entgegengewirkt.

Die Erfindung stellt also eine Möglichkeit zur Speicherung einer hinreichenden Menge elektrischer Energie durch Vorsehen der Energiequelle bereit, so dass bei einem Stromausfall der Aktuator noch in eine entgegengesetzte Endlage bewegbar ist, so dass die Verriegelung miteinander verbundener Steckverbinder lösbar ist. Dadurch, dass der Steckverbinder die Energiequelle aufweist, wobei vorzugsweise die Energiequelle innerhalb des Gehäuses des Steckverbinders vorgesehen ist, bedarf es keinerlei Anpassung des Elektrofahrzeugs oder der Ladeeinrichtung, so dass die erfindungsgemäße Lösung besonders einfach und universell für jegliche aus dem Stand der Technik bekannte Elektrofahrzeuge und/oder Ladeeinrichtungen einsetzbar ist. Ferner kann der erfindungsgemäße Steckverbinder hinsichtlich seiner elektrischen Kontaktierung mit dem zweiten Steckverbinder als ein beliebiger aus dem Stand der Technik bekannter Steckverbinder zur elektrischen Verbindung zwischen einer Ladeeinrichtung und einem Elektrofahrzeug ausgestaltet sein, beispielsweise dazu weitere Verriegelungs- und/oder Verrasteinrichtungen aufweisen, die jeweils durch den Aktuator verriegelbar bzw. entriegelbar sind. Darüber hinaus kann der Steckverbinder ebenfalls als Kupplung, Stecker und/oder Buchse ausgestaltet sein, wobei der Fachmann den Steckverbinder hinsichtlich des zwischen dem Elektrofahrzeug und der Ladeeinrichtung zu übertragenden Stroms passend dimensionieren wird. Ferner können der Steckverbinder und/oder der zweite Steckverbinder als Gerätestecker oder als Kabelstecker ausgestaltet sein, wobei vorzugsweise der Steckverbinder als Gerätestecker und der zweite Steckverbinder als Kabelstecker ausgestaltet sind. Ferner ist bevorzugt, dass der Steckverbinder zum Herstellen einer elektrischen Verbindung mit einem zweiten einem Verbindungskabel zugeordneten Steckverbinder ausgestaltet ist, wobei das Verbindungskabel zur elektrischen Verbindung zwischen dem Elektrofahrzeug und der Ladeeinrichtung vorsehbar ist.

Grundsätzlich kann die Energiequelle beliebig ausgestaltet sein. Gemäß einer bevorzugten Ausführungsform der Erfindung ist jedoch vorgesehen, dass die Energiequelle als Akkumulator, als Kondensator und/oder als Spule ausgestaltet ist. Ebenfalls ist es möglich, die Energiequelle als Batterie auszugestalten, wobei bevorzugt jedoch ein Akkumulator verwendbar ist. Im Falle eines Kondensators als Energiequelle wird der Fachmann vorzugsweise einen Widerstand vorsehen, über den der Kondensator bis zu seiner Betriebsspannung aufladbar ist. Sofern nun ein Stromausfall an der Ladeeinrichtung und/oder an dem Elektrofahrzeug auftritt, kann der Kondensator in geeigneter Weise mit dem Aktuator verbunden werden, so dass sich der Kondensator über den Aktuator entlädt und damit dem Aktuator eine ausreichende Energiemenge bereitstellt, so dass der Aktuator die miteinander verbundenen Steckverbinder entriegeln kann. Ebenso wird der Fachmann den Akkumulator, den Kondensator und/oder die Spule hinsichtlich ihrer elektrischen Kenngrößen passend dimensionieren, so dass vorgenannte Bauteile dem Aktuator eine ausreichende Menge Energie bereitstellen, um die miteinander verbundenen Steckverbinder zu entriegeln. "Miteinander verbunden" meint im Rahmen dieser Erfindung, dass die beiden Steckverbinder eine elektrische Verbindung zwischen dem Elektrofahrzeug und der Ladeeinrichtung bereitstellen und dazu vorzugsweise eine form- und/oder kraftschlüssig Verbindung miteinander aufweisen. Die Ladeeinrichtung kann ferner als eine beliebige aus dem Stand der Technik bekannte Einrichtung zum Aufladen des Fahrzeugakkumulators des Elektrofahrzeugs, beispielsweise eines Elektro-PKWs, ausgestaltet sein.

Nach einer anderen bevorzugten Ausführungsform der Erfindung ist vorgesehen, dass die Energiequelle derart ausgestaltet ist, dass die Energiequelle durch die Ladeeinrichtung und/oder einem dem Elektrofahrzeug zugeordneten Fahrzeugakkumulator aufladbar ist. Das bedeutet, dass im "Normalbetrieb", also wenn die Ladeeinrichtung mit dem Elektrofahrzeug zum Aufladen des Fahrzeugakkumulators verbunden ist oder der Fahrzeugakkumulator eine ausreichende Energiemenge aufweist, die Energiequelle durch die Ladeeinrichtung bzw. den Fahrzeugakkumulator aufladbar ist, wobei der Fachmann hierzu eine entsprechende Schaltung vorsehen kann, die beispielsweise ein Überladen der Energiequelle verhindert.

Grundsätzlich kann der Aktuator beliebig ausgestaltet sein, wobei jedoch besonders bevorzugt ist, dass der Aktuator derart ausgestaltet ist, dass der Aktuator durch einen wechselweise gepolten elektrischen Impuls die vorzugsweise miteinander verbundenen Steckverbinder verriegelt bzw. entriegelt. Nach einer weiteren Ausführungsform der Erfindung ist bevorzugt, dass der Aktuator derart ausgestaltet ist, dass der Aktuator bis zum Erhalt des elektrischen Impulses energielos in der Verriegelungsposition bzw. in der Entriegelungsposition verbleibt. Dadurch wird vorteilhaft erreicht, dass der Aktuator zum einen vorzugsweise durch einen kurzen elektrischen Stromimpuls angesteuert werden kann und zum anderen nach Erreichen seiner Endlage, also der Verriegelungsposition bzw. der Entriegelungsposition der Steckverbinder, also wenn die Steckverbinder miteinander verriegelt sind bzw. voneinander lösbar sind, passiv in dieser Position verbleibt, so dass auch im verriegelten Zustand der Steckverbinder, beispielsweise während der Ladung des Fahrzeugakkumulators des Elektrofahrzeugs, keinerlei Energie durch den Aktuator verbraucht wird. Weiterhin kann ein Schalter vorgesehen sein, mit dem der Aktuator im Falle eines Stromausfalls oder auch im "Normalbetrieb" angesteuert werden kann, so dass durch Betätigen des Schalters die miteinander verbundenen Steckverbinder verriegelt bzw. entriegelt werden können.

Bei einer weiteren bevorzugten Ausführungsform ist vorgesehen, dass der Steckverbinder eine Verriegelungseinrichtung aufweist, wobei die Verriegelungseinrichtung axial oder radial zur Steckrichtung der Steckverbindung zum Verriegeln bzw. Entriegeln der Steckverbinder durch den Aktuator bewegbar ist. Dabei kann die Verriegelungseinrichtung, beispielsweise eine Welle aufweisen, welche wiederum einen Zylinderstift zum Verriegeln bzw. Entriegeln der Steckverbinder derart ansteuert, dass der Zylinderstift die miteinander verbundenen Steckverbinder axial oder radial zur Steckrichtung der Steckverbinder miteinander verriegelt bzw. entriegelt.

Nach einer anderen besonders bevorzugten Ausführungsform der Erfindung ist vorgesehen, dass die Energiequelle als Akkumulator ausgestaltet ist und der Steckverbinder eine derart ausgestaltete Zeitschalteinrichtung aufweist, dass die Zeitschalteinrichtung den Aktuator nach dem Entriegeln der miteinander verbundenen Steckverbinder energielos, vorzugsweise spannungslos und/oder stromlos, schaltet. Dadurch kann in vorteilhafter Weise die vollständige Entladung des Akkumulators verhindert werden, so dass die erfindungsgemäß durch die derart ausgeführte Energiequelle bereitgestellte Möglichkeit zur Verriegelung bzw. Entriegelung nach Behebung des Stromausfalls sofort wieder einsatzfähig ist.

Ferner ist gemäß einer anderen Ausgestaltung der Erfindung bevorzugt, dass der Aktuator derart ausgestaltet ist, dass der Aktuator durch einen von der Ladeeinrichtung und/oder von einen dem Elektrofahrzeug zugeordneten Fahrzeugakkumulator erzeugbaren elektrischen Impuls ansteuerbar ist und der Steckverbinder eine derart eingerichtete Umschalteinrichtung für den Aktuator aufweist, dass, wenn der elektrische Impuls durch die Ladeeinrichtung und/oder durch den dem Elektrofahrzug zugeordneten Fahrzeugakkumulator nicht erzeugbar ist, die Umschalteinrichtung die Energiequelle mit dem Aktuator verbindet. Gemäß dieser Ausführungsform der Erfindung ist also vorgesehen, dass der Aktuator im "Normalbetrieb", also wenn kein Stromausfall seitens der Ladeeinrichtung und/oder des Fahrzeugakkumulators vorliegt, durch die von der Ladeeinrichtung bzw. dem Fahrzeugakkumulator bereitgestellte Energie ein Verriegeln bzw. Entriegeln der Steckverbinder ermöglicht, allerdings bei einem Stromausfall die erfindungsgemäße Umschalteinrichtung den Aktuator mit der Energiequelle verbindet, so dass auch bei Stromausfall der Aktuator durch die durch die Energiequelle bereitgestellte elektrische Energie betätigbar bleibt. Unter einem "elektrischen Impuls" kann im Rahmen der Erfindung einerseits eine Strom- und/oder Spannungsflanke zu verstehen sein, die bei einer Änderung eines Stroms und/oder einer Spannung von einem ersten Wert auf einen zweiten Wert entsteht, oder aber auch andererseits eine "kurzfristiger" Impuls durch Änderung eines Stroms und/oder einer Spannung von einem ersten Wert auf einen zweiten Wert und danach wieder zurück auf den ersten Wert.

In diesem Zusammenhang ist weiterhin bevorzugt, dass die Umschalteinrichtung derart eingerichtet ist, dass, wenn der elektrisch Impuls durch die Ladeeinrichtung und/oder durch den dem Elektrofahrzeug zugeordneten Fahrzeugakkumulator nicht erzeugbar ist, die Umschalteinrichtung einen durch den Energiequelle erzeugten elektrischen Impuls an den Aktuator zum Entriegeln der vorzugsweise miteinander verbundenen Steckverbinder sendet. Gemäß dieser Ausführungsform ist also vorgesehen, dass beim Auftreten eines Stromausfalls, als wenn weder die Ladeeinrichtung noch der Fahrzeugakkumulator, oder auch nur die Ladeeinrichtung oder nur der Fahrzeugakkumulator, den elektrischen Impuls bereitstellen können, die Umschalteinrichtung zum einen automatisch den Aktuator mit der Energiequelle verbindet und zum anderen automatisch die miteinander verbundenen Steckverbinder durch Beaufschlagung des Aktuators mit dem elektrischen Impuls entriegelt. Dadurch wird also ermöglicht, dass bei einem Stromausfall die Verriegelung der Steckverbinder automatisch aufgehoben wird und der Steckverbinder von dem zweiten Steckverbinder entfernbar ist, also beispielsweise das Verbindungskabel zwischen dem Elektrofahrzeug und der Ladeeinrichtung von dem Elektrofahrzeug bzw. der Ladeeinrichtung lösbar ist. Dabei ist die Umschalteinrichtung vorzugsweise als Relais ausgeführt.

Die Aufgabe der Erfindung wird weiterhin gelöst durch eine Ladeeinrichtung oder ein Elektrofahrzeug, mit einem Steckverbinder wie vorab ausgeführt, wobei die Ladeeinrichtung bzw. ein dem Elektrofahrzeug zugeordneter Fahrzeugakkumulator zum Erzeugen des elektrischen Impulses ausgestaltet ist. Dazu weist bevorzugt das Elektrofahrzeug den Fahrzeugakkumulator auf.

Nachfolgend wird die Erfindung unter Bezugnahme auf die anliegende Zeichnung anhand einer bevorzugten Ausführungsform näher erläutert:
Es zeigen
- Fig. 1: einen Steckverbinder gemäß einer bevorzugten Ausführungsform der Erfindung in einer perspektivischen Explosivansicht, und
- Fig. 2: ein Ersatzschaltbild für die Ansteuerung eines Aktuators des Steckverbinders gemäß der bevorzugten Ausführungsform der Erfindung.

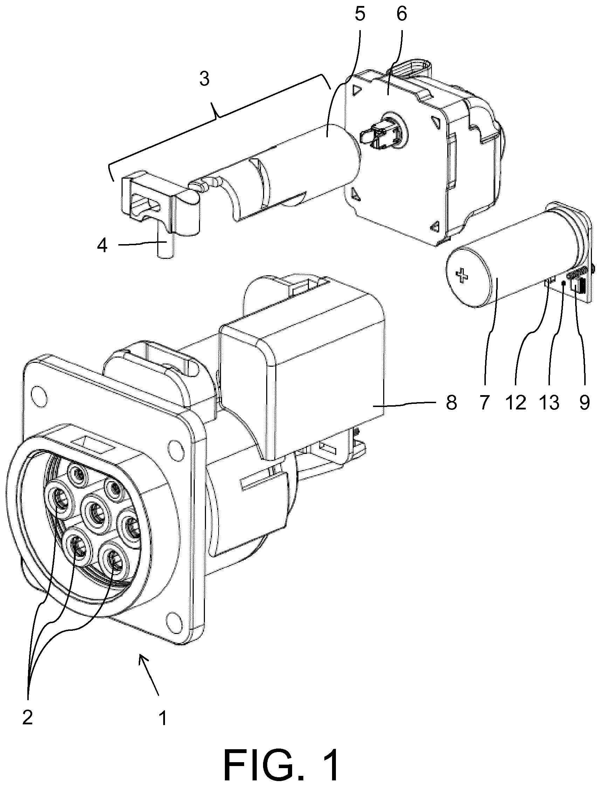

Fig. 1 zeigt einen erfindungsgemäßen Steckverbinder 1 gemäß einer bevorzugten Ausführungsform der Erfindung in einer perspektivischen Explosivdarstellung.

Der Steckverbinder 1, welcher vorliegend als Gerätestecker im Sinne einer Buchse ausgeführt ist, dient zum elektrischen Anschließen eines Elektrofahrzeugs an eine Ladeeinrichtung, so dass ein dem Elektrofahrzeug zugeordneter Fahrzeugakkumulator durch von der Ladeeinrichtung bereitgestellter elektrischer Energie aufgeladen werden kann. Dazu weist der Steckverbinder 1 verschiedene elektrische Kontakte 2 auf, mittels derer eine elektrische Verbindung zwischen dem Steckverbinder 1 und einem zweiten Steckverbinder hergestellt werden kann. Dabei wird hinsichtlich der konkreten Ausgestaltung der elektrischen Kontakte 2 bzw. der Steckverbinder 1 auf andere aus dem Stand der Technik bekannte Steckverbinder 1 verwiesen.

Zum Verriegeln zweier miteinander verbundener Steckverbinder 1 weist der Steckverbinder 1 eine Verriegelungseinrichtung 3 auf, welche vorliegend als Zylinderstift 4 sowie als Welle 5 ausgebildet ist. Die Verriegelungseinrichtung 3 ist über einen Aktuator 6 betätigbar, so dass mittels des Aktuators 6 über die Welle 5 der Zylinderstift 4 der Verriegelungseinrichtung 3 radial zur Steckrichtung der Steckverbinder 1 bewegbar ist, somit mittels des Zylinderstiftes 4 die miteinander verbundenen Steckverbinder 1 verriegelbar bzw. entriegelbar sind. Im verriegelten Zustand kann der zweite Steckverbinder, der beispielsweise einem Verbindungskabel zwischen der Ladeeinrichtung und dem Elektrofahrzeug zugeordnet ist, nicht von dem ersten Steckverbinder 1 gelöst werden.

Obwohl vorliegend in Fig. 1 nicht gezeigt, kann die Verriegelungseinrichtung 3 ebenfalls derart ausgestaltet sein, dass der Zylinderstift 4 durch den Aktuator 6 in axialer Steckrichtung der Steckverbinder 1 zum verriegeln bzw. entriegeln der Steckverbinder 1 bewegbar ist.

Der Aktuator 6 ist vorliegend derart ausgestaltet, dass der Aktuator 6 durch einen elektrischen Impuls, also einen elektrischen Stromimpuls, ansteuerbar ist, konkret durch einen wechselweise gepolten elektrischen Stromimpuls die miteinander verbundenen Steckverbinder 1 verriegelt bzw. entriegelt. Nach Erhalt des elektrischen Impulses, also nach einem Verriegelungs- bzw. Entriegelungsvorgang, verbleibt der Aktuator 6 in der Verriegelungsposition bzw. Entriegelungsposition energielos, bis dass ein weiterer elektrischer Impuls den Aktuator 6 zum Entriegeln bzw. Verriegeln der Steckverbinder 1 veranlasst.

Im "Normalbetrieb", also wenn beispielsweise der in die Ladeeinrichtung integrierte Steckverbinder 1 mit elektrischer Energie versorgt wird, erfolgt die Bereitstellung des elektrischen Impulses für den Aktuator 6 durch die durch die Ladeeinrichtung und/oder den Fahrzeugakkumulator zur Verfügung gestellte elektrische Energie.

Erfindungsgemäß ist nunmehr vorgesehen, dass der Steckverbinder 1 eine elektrische Energiequelle 7 aufweist, welche vorliegend als Kondensator, beispielsweise als Elektrolytkondensator, ausgeführt ist. Dabei ist die Energiequelle 7 derart dimensioniert, dass die Energiequelle 7 bei Stromausfall, also wenn die Ladeeinrichtung keine ausreichende Energie zum Betätigen des Aktuators 6 zur Verfügung stellt, den Aktuator 6 durch einen von der Energiequelle 7 zur Verfügung gestellten elektrischen Impuls betätigt, somit also die miteinander verbundenen Steckverbinder 1 entriegelbar und damit voneinander lösbar sind.

Dadurch, dass die Energiequelle 7 in dem Steckverbinder 1 integriert ist, was vorliegend durch ein Gehäuse 8, in das die Energiequelle 7 einführbar ist, realisiert ist, lässt sich der erfindungsgemäße Steckverbinder 1 besonders platzsparend ausgestalten und somit an beliebigen aus dem Stand der Technik bekannten Ladeeinrichtungen und/oder Elektrofahrzeugen anbringen.

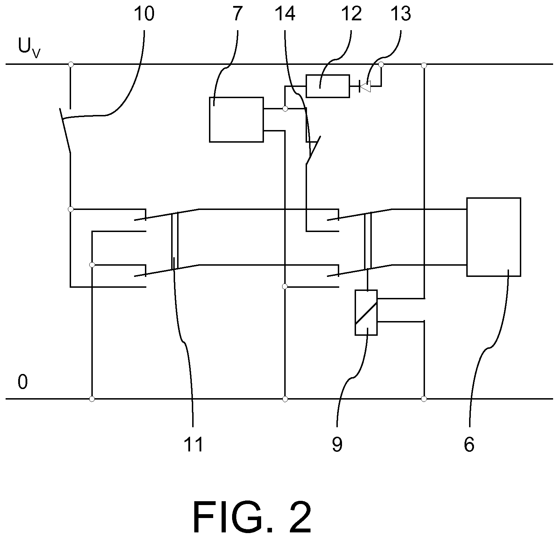

Dabei ist gemäß Fig. 2 der Aktuator 6 über eine Umschalteinrichtung 9, welche vorliegend als Relais ausgeführt ist, mit der Energiequelle 7 verbunden. Wie aus dem in Fig. 2 dargestellten Ersatzschaltbild ferner ersichtlich ist, erfolgt im "Normalbetrieb" die Betätigung des Aktuators 6 zum Verriegeln bzw. Entriegeln mittels einer durch die Ladeeinrichtung oder den Fahrzeugakkumulator bereitgestellten Versorgungsspannung Uᵥ, so dass mittels eines Schalters 10 über eine Polwendeschaltung 11 der Aktuator 6 durch im Wechsel gepolte kurze Stromimpulse ansteuerbar ist. Sofern jedoch bei einem Stromausfall die Spannung Uᵥ wegfällt, kann der Aktuator 6 über die Energiequelle 7 betätigt werden. Dazu ist es ebenfalls möglich, dass bei Stromausfall der Aktuator 6 mittels durch die Energiequelle 7 bereitgestellter Energie automatisch die Verriegelung der Steckverbinder 1 aufhebt.

Sofern die Energiequelle 7 mittels eines Kondensators realisiert ist, wie vorliegend geschehen, ist vorteilhafterweise ein Widerstand 12 sowie eine Diode 13 vorgesehen, über die der Kondensator durch die Spannung Uᵥ bis zu seiner Betriebsspannung aufladbar ist. Bei Stromausfall, also Wegfall von Uᵥ, wird nun gemäß dem Ersatzschaltbild der Kondensator mit dem Aktuator 6 über die Umschalteinrichtung 9 verbunden und entlädt sich über den Aktuator 6 niederohmig, so dass dadurch der Aktuator 6 die Verriegelung zwischen den Steckverbindern 1 aufhebt.

Im Falle einer Ausführung der Energiequelle 7 als Akkumulator, ist vorzugsweise eine Zeitschalteinrichtung 14 vorgesehen, wobei die Zeitschalteinrichtung 14 den Aktuator 6 nach dem Entriegeln der miteinander verbundenen Steckverbinder 1 energielos schaltet.

Somit wird gemäß der Erfindung in besonders einfacher Weise ermöglicht, dass bei einem Stromausfall an der Ladeeinrichtung dennoch die Verriegelung zwischen den Steckverbindern 1 in einfacher Weise automatisch aufgehoben wird.

**Bezugszeichenliste**

| | |
|---|---|
| Steckverbinder | 1 |
| Elektrische Kontakte | 2 |
| Verriegelungseinrichtung | 3 |
| Zylinderstift | 4 |
| Welle | 5 |
| Aktuator | 6 |
| Energiequelle | 7 |
| Gehäuse | 8 |
| Umschalteinrichtung | 9 |
| Schalter | 10 |
| Polwendeschaltung | 11 |
| Widerstand | 12 |
| Diode | 13 |
| Zeitschalteinrichtung | 14 |

## Patentansprüche

1. Steckverbinder (1) zum elektrischen Anschließen eines Elektrofahrzeugs an eine Ladeeinrichtung, wobei
der Steckverbinder (1) zum Herstellen einer elektrischen Verbindung mit einem zweiten dem Elektrofahrzeug oder der Ladeeinrichtung zugeordneten Steckverbinder ausgestaltet ist,
der Steckverbinder (1) einen durch einen elektrischen Impuls ansteuerbaren Aktuator (6) zum Verriegeln bzw. Entriegeln der Steckverbinder (1) aufweist, **dadurch gekennzeichnet, dass**
der Steckverbinder (1) eine Energiequelle (7) zum Speichern elektrischer Energie zum Erzeugen des elektrischen Impulses derart aufweist, dass die zum Verriegeln bzw. Entriegeln der miteinander verbundenen Steckverbinder (1) benötigte Energie durch den Steckverbinder (1) selbst bereit gestellt werden kann.

2. Steckverbinder (1) nach Anspruch 1, wobei die Energiequelle (7) als Akkumulator, als Kondensator und/oder als Spule ausgestaltet ist.

3. Steckverbinder (1) nach einem der vorhergehenden Ansprüche, wobei die Energiequelle (7) derart ausgestaltet ist, dass die Energiequelle (7) durch die Ladeeinrichtung und/oder einem dem Elektrofahrzeug zugeordneten Fahrzeugakkumulator aufladbar ist.

4. Steckverbinder (1) nach einem der vorhergehenden Ansprüche, wobei der Aktuator (6) derart ausgestaltet ist, dass der Aktuator (6) durch einen wechselweise gepolten elektrischen Impuls die Steckverbinder (1) verriegelt bzw. entriegelt.

5. Steckverbinder (1) nach einem der vorhergehenden Ansprüche, wobei der Aktuator (6) derart ausgestaltet ist, dass der Aktuator (6) bis zum Erhalt des elektrischen Impulses energielos in der Verriegelungsposition bzw. in der Entriegelungsposition verbleibt.

6. Steckverbinder (1) nach einem der vorhergehenden Ansprüche, mit einer Verriegelungseinrichtung (3) für die Steckverbinder (1), wobei die Verriegelungseinrichtung (3) axial oder radial zur Steckrichtung der Steckverbinder (1) zum Verriegeln bzw. Entriegeln der Steckverbinder (1) durch den Aktuator (6) bewegbar ist.

7. Steckverbinder (1) nach einem der vorhergehenden Ansprüche, wobei die Energiequelle (7) als Akkumulator ausgestaltet ist, mit einer Zeitschalteinrichtung (14), wobei die Zeitschalteinrichtung (14) derart ausgestaltet ist, dass die Zeitschalteinrichtung (14) den Aktuator (6) nach dem Entriegeln der miteinander verbundenen Steckverbinder (1) energielos schaltet.

8. Steckverbinder (1) nach einem der vorhergehenden Ansprüche, wobei der Aktuator (6) derart ausgestaltet ist, dass der Aktuator (6) durch einen von der Ladeeinrichtung und/oder von einen dem Elektrofahrzeug zugeordneten Fahrzeugakkumulator erzeugbaren elektrischen Impuls ansteuerbar ist und der Steckverbinder (1) eine derart eingerichtete Umschalteinrichtung (9) für den Aktuator (6) aufweist, dass, wenn der elektrische Impuls durch die Ladeeinrichtung und/oder durch den dem Elektrofahrzeug zugeordneten Fahrzeugakkumulator nicht erzeugbar ist, die Umschalteinrichtung (9) die Energiequelle (7) mit dem Aktuator (6) verbindet.

9. Steckverbinder (1) nach Anspruch 8, wobei die Umschalteinrichtung (9) derart eingerichtet ist, dass, wenn der elektrische Impuls durch die Ladeeinrichtung und/oder durch den dem Elektrofahrzeug zugeordneten Fahrzeugakkumulator nicht erzeugbar ist, die Umschalteinrichtung (9) einen durch die Energiequelle (7) erzeugten elektrischen Impuls an den Aktuator (6) zum Entriegeln Steckverbinder (1) sendet.

10. Ladeeinrichtung oder Elektrofahrzeug, mit einem Steckverbinder (1) nach einem der vorhergehenden Ansprüche, wobei die Ladeeinrichtung bzw. ein dem Elektrofahrzeug zugeordneter Fahrzeugakkumulator zum Erzeugen des elektrischen Impulses ausgestaltet ist.

## Claims

1. Plug connector (1) for electrically connecting an electric vehicle to a charging device,
wherein
the plug connector (1) is designed to establish an electrical connection to a second plug connector associated to the electric vehicle or the charging device,
the plug connector (1) comprises an actuator (6), which can be driven by an electrical pulse, adapted for locking and unlocking the plug connectors (1),
**characterized in that**
the plug connector (1) comprises an energy source (7) for storing an electrical energy and for generating the electrical pulse such that the energy required for locking and unlocking the plug connectors (1) connected to each other can be provided by the plug connector (1) itself.

2. Plug connector (1) according to claim 1, wherein the energy source (7) is implemented as a secondary battery, a capacitor and/or an inductor.

3. Plug connector (1) according to any one of the preceding claims, wherein the energy source (7) is configured such that the energy source (7) can be charged by the charging device and/or a vehicle's secondary battery associated to the electric vehicle.

4. Plug connector (1) according to any one of the preceding claims, wherein the actuator (6) is configured such that the actuator (6) locks and unlocks the plug connectors (1) by an alternately polarized electrical pulse.

5. Plug connector (1) according to any one of the preceding claims, wherein the actuator (6) is implemented such that the actuator (6) remains wattlessly in the locking state or in the unlocking state until the actuator receives the electrical pulse.

6. Plug connector (1) according to any one of the preceding claims, comprising a locking means (3) for the plug connectors (1), wherein the locking means (3) can be moved axially or radially with respect to the plug direction of the plug connectors (1) for locking and unlocking the plug connectors (1) by means of the actuator (6).

7. Plug connector (1) according to any one of the preceding claims, wherein the energy source (7) is configured as a secondary battery, including a timing means (14), wherein the timing means (14) is configured such that the timing means (14) switches the actuator (6) into a wattless state after unlocking the plug connectors (1) connected to each other.

8. Plug connector (1) according to any one of the preceding claims, wherein the actuator (6) is configured such that the actuator (6) can be driven by an electrical pulse generated by the charging device and/or a vehicle's secondary battery associated to the electrical vehicle and the plug connector (1) comprises a switching means (9) for the actuator (6) configured such that, when the electrical pulse cannot be generated by the charging device and/or the vehicle's secondary battery associated to the electrical vehicle, the switching means (9) connects the energy source (7) to the actuator (6).

9. Plug connector (1) according to claim 8, wherein the switching means (9) is configured such that, when the electrical pulse cannot be generated by the charging means and/or the vehicle's secondary battery associated to the electrical vehicle, the switching means (9) transmits an electrical pulse generated by the energy source (7) for unlocking the plug connectors (1).

10. Charging device or electric vehicle comprising a plug connector (1) according to any one of the preceding claims, wherein the charging device or a vehicle's secondary battery associated to the electric vehicle is configured for generating the electrical pulse.

## Revendications

1. Connecteur (1) pour le raccordement électrique d'un véhicule électrique à un dispositif de charge, où
le connecteur (1) est conçu pour l'établissement d'une liaison électrique avec un deuxième connecteur associé au véhicule électrique ou au dispositif de charge,
le connecteur (1) présente un actionneur (6) pouvant être commandé par une impulsion électrique pour le verrouillage, respectivement, le déverrouillage, du connecteur (1),
**caractérisé en ce que**
le connecteur (1) présente une source d'énergie (7) pour le stockage d'énergie électrique en vue de la génération de l'impulsion électrique de telle façon que l'énergie nécessaire pour le verrouillage, respectivement, le déverrouillage, des connecteurs (1) reliés ensemble peut être mise à disposition par le connecteur (1) lui-même.

2. Connecteur (1) selon la revendication 1, dans lequel la source d'énergie (7) est conçue sous la forme d'un accumulateur, sous la forme d'un condensateur et/ou sous la forme d'une bobine.

3. Connecteur (1) selon l'une des revendications précédentes, dans lequel la source d'énergie (1) est conçue de telle façon que la source d'énergie (1) peut être chargée par le dispositif de charge et/ou un accumulateur de véhicule disposé dans le véhicule électrique.

4. Connecteur (1) selon l'une des revendications précédentes, dans lequel l'actionneur (6) est conçu de telle façon que l'actionneur (6) verrouille, respectivement, déverrouille, les connecteurs (1) par une impulsion électrique polarisée alternativement.

5. Connecteur (1) selon l'une des revendications précédentes, dans lequel l'actionneur (6) est conçu de telle façon que l'actionneur (6) reste sans énergie dans la position de verrouillage, respectivement, dans la position de déverrouillage, jusqu'à l'établissement de l'impulsion électrique.

6. Connecteur (1) selon l'une des revendications précédentes, avec un dispositif de verrouillage (3) pour les connecteurs (1), où le dispositif de verrouillage (3) peut être déplacé axialement ou radialement par rapport au sens de connexion des connecteurs (1) pour le verrouillage, respectivement, le déverrouillage, des connecteurs (1) par l'actionneur (6).

7. Connecteur (1) selon l'une des revendications précédentes, dans lequel la source d'énergie (7) est conçue sous la forme d'un accumulateur, avec un dispositif de temporisation (14), où le dispositif de temporisation (14) est conçu de telle façon que le dispositif de temporisation (14) commute l'actionneur (6) à l'état sans énergie après le déverrouillage des connecteurs (1) reliés ensemble.

8. Connecteur (1) selon l'une des revendications précédentes, dans lequel l'actionneur (6) est conçu de telle façon que l'actionneur (6) peut être mis en marche par une impulsion électrique pouvant être générée par le dispositif de charge et/ou par un accumulateur de véhicule associé au véhicule électrique et le connecteur (1) présente un dispositif de commutation (9) conçu de telle façon pour l'actionneur (6) que, lorsque l'impulsion électrique ne peut pas être générée par le dispositif de charge et/ou par l'accumulateur de véhicule associé au véhicule électrique, le dispositif de commutation (9) relie la source d'énergie (7) avec l'actionneur (6).

9. Connecteur selon la revendication 8, dans lequel le dispositif de commutation (9) est conçu de telle façon que, lorsque l'impulsion électrique ne peut pas être générée par le dispositif de charge et/ou l'accumulateur de véhicule du véhicule électrique, le dispositif de commutation (9) envoie une impulsion électrique générée par la source d'énergie (7) vers l'actionneur (6) pour le déverrouillage des connecteurs (1).

10. Dispositif de charge ou véhicule électrique, avec un connecteur (1) selon l'une des revendications précédentes, où le dispositif de charge, respectivement, un accumulateur de véhicule associé au véhicule électrique, est conçu pour la génération de l'impulsion électrique.
